(19) Europäisches Patentamt
European Patent Office
Office européen des brevets

(11) **EP 3 588 654 A1**

(12) **EUROPEAN PATENT APPLICATION**
published in accordance with Art. 153(4) EPC

(43) Date of publication:
**01.01.2020 Bulletin 2020/01**

(51) Int Cl.:
**H01M 10/04** *(2006.01)*     **H01M 2/16** *(2006.01)*

(21) Application number: **17897847.4**

(22) Date of filing: **27.02.2017**

(86) International application number:
**PCT/JP2017/007468**

(87) International publication number:
**WO 2018/154777 (30.08.2018 Gazette 2018/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Envision AESC Japan Ltd.
Kanagawa
2520012 (JP)**

(72) Inventors:
• **YAMASHITA, Takeshi
Atsugi-shi
Kanagawa 243-0123 (JP)**

• **SATOU, Takanori
Atsugi-shi
Kanagawa 243-0123 (JP)**
• **SHIRAI, Kenichi
Atsugi-shi
Kanagawa 243-0123 (JP)**
• **NAGASHIMA, Tomio
Atsugi-shi
Kanagawa 243-0123 (JP)**
• **MASUDA, Asuna
Atsugi-shi
Kanagawa 243-0123 (JP)**

(74) Representative: **Grünecker Patent- und
Rechtsanwälte
PartG mbB
Leopoldstraße 4
80802 München (DE)**

(54) **METHOD FOR PRODUCING MONO-CELL**

(57)     [Abstract] In a method for producing a mono-cell (1) of the present invention, the mono-cell (1) is formed of a separator (4), a positive electrode (6), a separator (8) and a negative electrode (10) which are bonded to one another. Each of the separators (4, 8) includes a ceramic layer (22, 23) on a surface facing the positive electrode (6). On each of a lower surface (6a) and an upper surface (6b) of the positive electrode (6), an adhesive (46, 48) is applied at a plurality of points lined up on a straight line along a width direction (W) orthogonal to a mono-cell conveyance direction (D). When an application length is defined as the product of the number of application points of the adhesive (46, 48) lined up in the width direction (W) and the application diameter of each adhesive, the number of application points and the application diameter are set such that a value obtained by dividing, by the application length, a force applied to each ceramic layer (22, 23) based on acceleration and the weight of the separator (4) etc. during suction and conveyance becomes smaller than the necessary peeling strength per unit length of the ceramic layer (22, 23).

**EP 3 588 654 A1**

## Description

### TECHNICAL FIELD

The present invention relates to a method for producing a mono-cell formed by bonding a positive electrode and a negative electrode to respective both surfaces of a separator equipped with a ceramic layer.

### BACKGROUND TECHNOLOGY

In a patent document 1, a method for producing an electrode laminate used for a lithium secondary battery has been disclosed. In this producing method, to improve productivity of the lithium secondary battery, by laminating a plurality of basic laminated bodies, each of which is formed of a bagged electrode formed by bonding a pair of seat-like separators in a state of sandwiching a seat-like positive electrode that is an electrode, and of a seat-like negative electrode that is an electrode and which is bonded to the bagged electrode, the electrode laminate that becomes a power generation element is formed. The bonding between the positive electrode and the separators and the bonding between the negative electrode and the bagged electrode (that is, a separator) are carried out by applying adhesive to each of the positive electrode and the negative electrode in a dot-like state, and pressing them.

On the other hand, one having a ceramic layer that is a heat resistant insulating layer serving as a separator has been known. When such a separator is bonded to an electrode by applying adhesive in a dot-like state like above, there is concern about the peeling of the ceramic layer.

The present invention has been made in a consideration of such a problem, and the present invention is one to provide a method for producing a mono-cell with which the peeling of a ceramic layer at the time of the suction and conveyance of the mono-cell is suppressed.

### PRIOR ART DOCUMENT

### PATENT DOCUMENT

Patent Document 1: Japanese Patent Application Publication 2012-160352

### SUMMARY OF THE INVENTION

In the method for producing a mono-cell in the present invention, the mono-cell is formed by bonding a sheet-like positive electrode and a sheet-like negative electrode to respective both surfaces of a separator equipped with, on at least one of the surfaces thereof, a heat resistant layer. When an application length is defined as the product of the number of application points of the adhesive in the width direction orthogonal to a mono-cell conveyance direction and an application diameter of each adhesive, the number of the application points and the application diameter are set such that a value obtained by dividing, by the application length, a force applied to the heat resistant layer based on a weight and an acceleration during suction and conveyance becomes smaller than a necessary peeling strength per unit length of the heat resistant layer.

According to the present invention, even if the force is applied to the heat resistant layer of the separator caused by the vibration during the suction and conveyance, peeling of the heat resistant layer can be suppressed, and the bonding of the electrode and the separator can be kept.

### BRIEF DESCRIPTION OF THE DRAWINGS

FIG. 1 is a perspective view of an electrode lamination device of one embodiment.
FIG. 2 is an exploded perspective view of a mono-cell.
FIG. 3 is an exploded perspective view of the mono-cell.
FIG. 4 is an explanatory view showing the mono-cell which is being conveyed by a suction conveyor.
FIG. 5 is a plane view showing one example of arrangement of adhesives applied to a positive electrode.

### MODE FOR IMPLEMENTING THE INVENTION

In the following, one embodiment of the present invention will be explained in detail based on the drawings.

FIG. 1 schematically shows an electrode lamination device 2 for continuously producing a mono-cell 1 that becomes a basic laminated body. Each of FIG. 2 and FIG. 3 schematically shows mono-cell 1 produced by electrode lamination device 2. Here, in the following explanation, to facilitate understanding, the postures of mono-cell 1 and electrode lamination device 2 in each of FIG. 1 to FIG. 3 is set as a reference, and "upper and lower" are determined.

As show in each of FIG. 2 and FIG. 3, in the present embodiment, mono-cell 1 is integrally formed as a four-layer structure by laminating a sheet-like separator 4, a sheet-like positive electrode 6 that is an electrode, a sheet-like separator 8 and a sheet-like negative electrode 10 that is an electrode in this order from the upper side, and bonding them to one another.

Positive electrode 6 is formed in a sheet shape by binding active material layers to both of the respective surfaces of a collector made of, for example, aluminum. Positive electrode 6 includes a pair of side portions 12 and 13 along long sides and a pair of end portions 14 and 15 along short sides, and, moreover, a positive electrode tab 16 is included at a position on the side portion 12 side of end portion 14.

Negative electrode 10 is formed in a sheet shape by binding active material layers to both of the respective surfaces of a collector made of, for example, copper. As shown in FIG. 3, the dimension of negative electrode 10 is slightly larger than that of positive electrode 6. Negative electrode 10 includes a pair of side portions 17 and 18 along long sides and a pair of end portions 19 and 20 along short sides, and, moreover, a negative electrode tab 21 is included at a position on the side portion 18 side so as to be positioned on the opposite side to the position side of positive electrode tab 16.

Separators 4 and 8 each function to electrically isolate positive electrode 6 and negative electrode 10, and to hold electrolyte between positive electrolyte 6 and negative electrolyte 10. Separators 4 and 8 have the same structure, are each formed in a rectangular shape, and are each made of synthetic resin, such as polyethylene and polypropylene. The dimension of each of separators 4 and 8 is larger than that of negative electrode 10 except negative electrode tab 21. As shown in FIG. 3, separator 4 includes a ceramic layer 22, whose melting point is relatively high and which becomes a heat resistant layer, at a surface facing positive electrode 6, that is, a lower surface 4a of separator 4, and separator 8 includes a ceramic layer 23, whose melting point is relatively high and which becomes a heat resistant layer, at a surface facing positive electrode 6, that is, an upper surface 8a. For example, ceramic layers 22 and 23 are formed by applying ceramic to separators 4 and 8 (that is, resin layers), and drying them. Ceramic layers 22 and 23 are each made of porous material formed by bonding binder and ceramic particles, such as silica, alumina, zirconium oxide and titanium oxide.

By laminating a plurality of mono-cells 1 formed in such a way, an electrode laminate, that is, a power generation element is formed. The electrode laminate is accommodated in an exterior body formed by a laminate film together with electrolyte, and a film exterior battery is formed.

As shown in FIG. 1, electrode lamination device 2 for continuously producing mono-cell 1 includes a suction drum 28 and a nip roller 30 which are provided so as to face each other through separator 8 continuously extending in a belt shape in the longitudinal direction of device 2. A dispenser 32 for the negative electrode which is disposed so as to face suction drum 28 is disposed on the upstream side of this suction drum 28. Negative electrode dispenser 32 includes a plurality of nozzles 32a (in the present embodiment, three nozzles) disposed at equal intervals along the width direction of separator 8. This negative electrode dispenser 32 applies adhesives 34 in a dot-like state to an upper surface 10a of negative electrode 10 (see FIG. 2) which is conveyed to device 2 after being cut to a predetermined dimension in advance. Suction drum 28 sucks and conveys negative electrode 10 to which adhesives 34 had been applied, and successively laminates negative electrode 10 to a lower surface 8b of separator 8 in a posture in which negative electrode tab 21 is directed to a side of device 2. Nip roller 30 presses negative electrode 10 and separator 8 laminated on each other to suction drum 28, as a result of which negative electrode 10 is bonded to separator 8.

On the downstream side of nip roller 30, a suction drum 38, a nip roller 40 provided below suction drum 38 through separator 8, a first dispenser 42 for the positive electrode which is provided so as to face suction drum 38, and a second dispenser 44 for the positive electrode which is provided on the downstream side of suction drum 38 are disposed. Dispenser 42 includes a plurality of nozzles 42a (in the present embodiment, three nozzles) disposed at equal intervals along the width direction of separator 8, and dispenser 44 includes a plurality of nozzles 44a (in the present invention, three nozzles) disposed at equal intervals along the width direction of separator 8. First dispenser 42 for the positive electrode applies adhesives 46 in a dot-like state to a lower surface 6a of positive electrode 6 (see FIG. 2) which had been cut to a predetermined dimension in advance and which will be conveyed to device 2. Suction drum 38 sucks and conveys positive electrode 6 to which adhesives 46 had been applied, and successively laminates positive electrode 6 to an upper surface 8a of separator 8 in a posture in which positive electrode tab 16 is directed to a side of device 2, so as to correspond to the position of negative electrode 10 bonded to separator 10. Nip roller 40 presses negative electrode 10, separator 8 and positive electrode 6, which are laminated on one another, to suction drum 38, as a result of which positive electrode 6 is bonded to upper surface 8a of separator 8 which is equipped with ceramic layer 23. Second dispenser 44 for the positive electrode applies adhesives 48 in a dot-like state to upper surface 6b of positive electrode 6 bonded to separator 8.

On the downstream side of nip roller 40, a conveyance roller 52 and a nip roller 54 are provided, and belt-like continuous separator 4 is supplied to upper surface 6b of positive electrode 6 through nip roller 54. With this, negative electrode 10, separator 8, positive electrode 6 and separator 4 become a laminated state. Lower surface 4a of separator 4 which is equipped with ceramic layer 22 is bonded to positive electrode 6.

A cutter 56 is provided on the downstream side of nip roller 54. Cutter 56 simultaneously cuts separators 8 and 4 between adjacent negative electrodes 10 and 10. With this, mono-cell 1 having a predetermined dimension is formed.

FIG. 4 shows a suction conveyor 60 for conveying mono-cell 1 individually formed as above, in the downstream side of electrode lamination device 2. Suction conveyor 60 includes a pair of pulleys 62 and an endless conveyor belt 64 wound on a pair of pulleys 62. Suction conveyor 60 sucks negative electrode 10 positioned on the uppermost part of mono-cell 1 which has been inverted by 180° by an inversion device which is not shown in the drawing, and then conveys mono-cell 1 along a mono-cell conveyance direction D shown in FIG. 4.

In this way, mono-cell 1 is sucked and conveyed, and if application areas of the adhesives are small, there is fear that by loads applied to ceramic layers 22 and 23 that are heat resistant layers, ceramic layers 22 and 23 are peeled from base materials of separators 4 and 8 during the conveyance. In the present invention, by preferably setting the application areas and the number of application points each of the adhesives, the peeling of ceramic layers 22 and 23 is suppressed.

In one embodiment, as shown in FIG. 2 and FIG. 3, each of an adhesive 34 to be applied to upper surface 10a of negative electrode 10, an adhesive 46 to be applied to lower surface 6a of positive electrode 6 and an adhesive 48 to be applied to upper surface 6b of positive electrode 6 is applied to nine points of 3 x 3.

As one example, FIG. 5 shows arrangement of adhesives 46a to be applied to lower surface 6a of positive electrode 6. As shown in the drawing, three adhesives 46a arranged along a width direction W orthogonal to mono-cell conveyance direction D are arranged at the same positions with respect to mono-cell conveyance direction D. That is, adhesives 46a are lined up on a straight line. Similarly, three adhesives 46b and three adhesives 46c each arranged along width direction W are each lined up on a straight line. In addition, adhesives 34 and 48 are also arranged in the same manner. Here, in this embodiment, mono-cell conveyance direction D is the same direction as the conveyance direction of separator 8 and the like in electrode lamination device 2.

Each of adhesives 34, 46 and 48 has a circular shape having a predetermined application diameter "b". This application diameter "b" can be adjusted by adjusting a discharge amount from each of dispensers 32, 42 and 44, that is, nozzles 32a, 42a and 44a.

Next, with reference to FIG. 4 and FIG. 5, a method for setting the number of application points of the adhesive lined up on a straight line along width direction W and application diameter "b" of each adhesive will be explained by taking adhesives 46a to be applied to lower surface 6a of positive electrode 6 as an example.

As mentioned above, integrated mono-cell 1 is sucked and conveyed along mono-cell conveyance direction D by suction conveyor 60. At this time, as shown by an arrow B in FIG. 4, when conveyor belt 64 is vibrated vertically, acceleration A is generated to mono-cell 1.

By the product of this acceleration A and the own weights of positive electrode 6 and separator 4, a force X to be applied to ceramic layer 23 of separator 8 during the suction and conveyance is determined. This force X to be applied to ceramic layer 23 is obtained by the following formula.

$$(1) \ X \ (N) = (m1 + m2) \times A \times 9.8$$

Here, "m1" represents the mass of separator 4, "m2" represents the mass of positive electrode 6, and "A" represents acceleration generated by the vibration at the time of the suction and conveyance.

Moreover, a linear pressure P to be applied to ceramic layer 23 on a line along width direction W at the time of the suction and conveyance is obtained by dividing force X to be applied to ceramic layer 23 by an application length that is the product of the number "a" of application points of adhesive 46a to be linearly applied to positive electrode 6 along width direction W and application diameter "b" of each adhesive 46a which are shown in FIG. 5.

$$(2) \ P = X \ / \ (a \times b)$$

The number of application points of adhesive 46a along width direction W and application diameter "b" of each adhesive 46a are set such that linear pressure P to be applied to ceramic layer 23 becomes smaller than a necessary peeling strength Y per unit length of ceramic layer 23.

As one example, when mass m1 is set to 1 g, mass m2 is set to 20 g, and acceleration A is set to 3 G, and then the above formula (1) is solved, force X to be applied to ceramic layer 23 during the suction and conveyance becomes 0.617 N.

On the other hand, when the number of application points of adhesive 46a is set to three and application diameter "b" of each adhesive 46a is set to 12 mm, and the above formula (2) is solved, linear pressure P to be applied to ceramic layer 23 during the suction and conveyance becomes 0.017 N/mm. Therefore, necessary peeling strength Y per unit length of ceramic layer 23 becomes 0.017 N/mm or greater. In addition, the actual necessary peeling strength of the ceramic layer is approximately 0.01 N/mm to 0.03 N/mm.

In addition, in case where necessary peeling strength Y per unit length of ceramic layer 23 is 0.017 N/mm and force X to be applied to ceramic layer 23 during the suction and conveyance is 0.617 N, and when application diameter "b" of each adhesive 46a is set to 5 mm, the number "a" of application points of adhesive 46a to be applied along width direction W can be obtained by the following formula (3).

$$(3) \ a = X \ / \ (b \times Y)$$

When the above formula (3) is solved, "a" becomes 7.25. Therefore the number "a" of application points of adhesive 46a to be applied along width direction W is set to eight.

As mentioned above, by setting the number "a" of application points of adhesive 46a and application diameter "b" of each the adhesive, the peeling of ceramic layer 23 during the suction and conveyance of mono-cell 1 can be suppressed.

As the above, although a method for setting the number "a" of application points of the adhesive and application diameter "b" of each adhesive have been explained by taking adhesives 46a to be applied to lower surface 6a of positive electrode 6 as an example, the number "a" of application points of adhesive 48 to be applied on the same line along width direction W in upper surface 6b of positive electrode 6 and application diameter "b" of each adhesive 48 can be also set to the same as those of adhesive 46a.

In addition, a linear pressure P applied to ceramic layer 22 of separator 4 positioned on the lowermost part of mono-cell 1 during the conveyance of the mono-cell, that is, after the inverting of mono-cell 1 is smaller than linear pressure P to be applied to ceramic layer 23 of separator 8. Therefore if the number "a" of application points of adhesive 48 and application diameter "b" of each adhesive 48 are set equal to the number "a" of application points of adhesive 46a and application diameter "b" of each adhesive 46a respectively, the peeling of ceramic layer 22 during the suction and conveyance of mono-cell 1 can be suppressed.

As the above, although one embodiment of the present invention has been explained, the present invention is not limited to the above embodiment, and can be variously changed.

Although, in the present embodiment, as a four-layer structure, mono-cell 1 is formed of separator 4, positive electrode 6, separator 8 and negative electrode 10, a mono-cell having a three-layer structure can be also applied to the present invention.

In addition, although, in the present invention, integrated mono-cell 1 is sucked and conveyed by suction conveyor 60, in a case of sucking and conveying mono-cell 1 by another type of a conveyance device, the present invention can be also applied.

In addition, even if the shape of the applied adhesive is oval, the present invention can be similarly applied.

**Claims**

1. A method for producing a mono-cell, comprising:

   bonding a sheet-like positive electrode and a sheet-like negative electrode, in each of which an adhesive has been applied to a plurality of points separated from each other in a width direction orthogonal to a mono-cell conveyance direction, to respective both surfaces of a separator equipped with, on at least one of the surfaces thereof, a heat resistant layer,
   wherein when an application length is defined as a product of the number of application points of the adhesive in the width direction and an application diameter of each adhesive, the number of the application points and the application diameter are set such that a value obtained by dividing, by the application length, a force applied to the heat resistant layer based on a weight and an acceleration during suction and conveyance becomes smaller than a necessary peeling strength per unit length of the heat resistant layer.

2. The method for producing the mono-cell according to claim 1, wherein the positive electrode is disposed between a pair of separators.

3. The method for producing the mono-cell according to claim 1 or 2, wherein each of the separators is provided with the heat resistant layer on a surface facing the positive electrode.

## INTERNATIONAL SEARCH REPORT

| International application No. |
|---|
| PCT/JP2017/007468 |

| A. CLASSIFICATION OF SUBJECT MATTER |
|---|
| *H01M10/04(2006.01)i, H01M2/16(2006.01)i* |

According to International Patent Classification (IPC) or to both national classification and IPC

| B. FIELDS SEARCHED |
|---|

Minimum documentation searched (classification system followed by classification symbols)
H01M10/04, H01M2/16

Documentation searched other than minimum documentation to the extent that such documents are included in the fields searched
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | WO 2014/103594 A1 (Nissan Motor Co., Ltd.), 03 July 2014 (03.07.2014), paragraphs [0018] to [0066]; fig. 4, 5 & US 2016/0197372 A1 paragraphs [0027] to [0074]; fig. 4, 5 & EP 2940775 A1 & CN 104854751 A & TW 201434652 A & KR 10-2015-0083914 A | 1–3 |
| Y | JP 2012-226829 A (IHI Corp.), 15 November 2012 (15.11.2012), paragraphs [0027] to [0030], [0052]; fig. 2 (Family: none) | 1–3 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 April 2017 (03.04.17) | 11 April 2017 (11.04.17) |

| Name and mailing address of the ISA/ | Authorized officer |
|---|---|
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

**INTERNATIONAL SEARCH REPORT**

International application No.

PCT/JP2017/007468

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2012-160352 A  (IHI Corp.),<br>23 August 2012 (23.08.2012),<br>paragraphs [0007], [0019], [0023], [0036],<br>[0037]<br>(Family: none) | 1-3 |
| A | JP 2011-512005 A  (LG Chem, Ltd.),<br>14 April 2011 (14.04.2011),<br>claim 1; paragraphs [0055], [0056]<br>& US 2010/0323230 A1<br>claim 1; paragraphs [0061], [0062]<br>& WO 2009/096671 A2     & KR 10-2009-0083854 A<br>& CN 101926024 A | 1-3 |

Form PCT/ISA/210 (continuation of second sheet) (January 2015)

**EP 3 588 654 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012160352 A